# EUROPEAN PATENT APPLICATION

(11) **EP 3 995 471 A1**
(43) Date of publication of application: **11.05.2022**
(21) Application number: 20857295.8
(22) Date of filing: 28.08.2020
(51) Int. Cl.: C04B 35/00

(54) **FLUORESCENT CERAMIC, PREPARATION METHOD THEREFOR AND LIGHT SOURCE DEVICE**

(30) Priority: 29.08.2019 CN 201910808533
(71) Applicant: Shenzhen Lighting Institute, Sheenzhen, Guangdong 518000 (CN)
(72) Inventor: LI, Qian, Shenzhen, Guangdong 518000 (CN); JIAN, Shuai, Shenzhen, Guangdong 518000 (CN); WANG, Yangang, Shenzhen, Guangdong 518000 (CN)
(74) Representative: DREISS Patentanwälte PartG mbB
(86) International application number: PCT/CN2020/112198
(87) International publication number: WO 2021/037226

(57) **Abstract**

The present invention relates to the technical field of laser light illumination and display, and disclosed are a fluorescent ceramic, a preparation method therefor and a light source device. The fluorescent ceramic comprises a ceramic matrix (11) and a fluorescent powder body (12) dispersed within the ceramic matrix (11), wherein air holes (13) are formed at the interior of crystal grains of the ceramic matrix (11). By means of the foregoing manner, the luminous efficiency of the fluorescent ceramic may be improved.

## Description

### TECHNICAL FIELD

The present disclosure relates to the technical field of laser light illumination and display, and in particular, to a fluorescent ceramic, a method for manufacturing the fluorescent ceramic, and a light source device.

### BACKGROUND

In laser light illumination and display technologies, a fluorescent material is excited mainly by a blue laser light to obtain fluorescence with other wavelength bands. With the continuous development of laser light illumination and display technologies, the fluorescent material has continuously increased requirements on various properties thereof. However, the current fluorescent materials have poor light conversion efficiency, low brightness, and poor thermal conductivity, so that it is difficult to carry the blue laser light with higher power density.

### SUMMARY

In view of this, the main technical problem to be solved by the present disclosure is to provide a fluorescent ceramic, a method for manufacturing the same, and a light source device, which can improve the luminous efficiency of the fluorescent ceramic.

In order to solve the above technical problems, a technical solution adopted by the present disclosure is to provide a fluorescent ceramic, which includes a ceramic matrix and a fluorescent powder body dispersed within the ceramic matrix. Air holes are formed at the interior of the crystal grains of the ceramic matrix.

In an embodiment of the present disclosure, a plurality of air holes uniformly distributed is formed at the interior of the crystal grains of the ceramic matrix.

In an embodiment of the present disclosure, the plurality of air holes has a diameter ranging from 0.1 µm to 2 µm.

In an embodiment of the present disclosure, the fluorescent powder body has a particle size ranging from 5 µm to 30 µm.

In an embodiment of the present disclosure, the ceramic matrix has a crystal grain size ranging from 5 µm to 20 µm.

In order to solve the above technical problems, another technical solution adopted by the present disclosure is to provide a method for manufacturing a fluorescent ceramic. The method includes: providing a raw material powder body of the ceramic matrix; sintering the raw material powder body of the ceramic matrix to obtain a first powder body with air holes formed at the interior of crystal grains; and mixing and sintering the first powder body and the fluorescent powder body to retain the air holes at the interior of the crystal grains of the ceramic matrix.

In an embodiment of the present disclosure, the step of sintering the raw material powder body of the ceramic matrix to obtain a first powder body with air holes formed at the interior of crystal grains includes: sintering a part of the raw material powder body of the ceramic matrix to obtain a first powder body billet; in which a remaining part of raw material powder body of the ceramic matrix is a second powder body; and crushing and grinding the first powder body billet to obtain the first powder body with the air holes formed at the interior of crystal grains.

In an embodiment of the present disclosure, the step of sintering a part of the raw material powder body of the ceramic matrix to obtain a first powder body billet includes: sintering the part of the raw material powder body of the ceramic matrix in an atmosphere with a temperature of 1600°C to 1800°C for 2 hours to 6 hours to obtain the first powder body billet.

In an embodiment of the present disclosure, the first powder body has a particle size greater than the second powder body.

In an embodiment of the present disclosure, the step of mixing and sintering the first powder body and the fluorescent powder body includes: mixing and sintering the first powder body, the second powder body, the fluorescent powder body and a sintering aid, in which the sintering aid is at least one of magnesium oxide, yttrium oxide, lanthanum oxide, and titanium oxide.

In an embodiment of the present disclosure, the sintering aid at least includes titanium oxide.

In an embodiment of the present disclosure, the step of mixing and sintering the first powder body, the second powder body, the fluorescent powder body and a sintering aid includes: mixing the first powder body, the second powder body, the fluorescent powder body, and the sintering aid through ball-milling to obtain a first mixing powder body billet; placing the first mixing powder body billet in a vacuum or protective gas atmosphere for heat preservation and sintering it under a temperature ranging from 1300°C to 1600°C, and a pressure ranging from 20 MPa to 180 MPa, for a time period ranging from 0.5 hour to 4 hours, to obtain a second mixing powder body billet; and annealing the second mixing powder body billet in an air atmosphere under a temperature ranging from 1200°C to 1400°C, for a time period ranging from 5 hours to 20 hours to obtain the fluorescent ceramic.

In an embodiment of the present disclosure, the fluorescent powder body accounts for 30% to 70% of the total mass of the first mixing powder body billet, the sintering aid accounts for 0.1% to 1% of the total mass of the first mixing powder body billet, and a mass ratio of the first powder body to the second powder body is 4:6 to 7:3.

In order to solve the above technical problem, another technical solution adopted by the present disclosure is to provide a light source device, which includes the fluorescent ceramic as described in the above embodiments.

The present disclosure has following beneficial effects: compared with the related art, the present disclosure provides a fluorescent ceramic, in which air holes are formed at the interior of the crystal grains of the ceramic matrix. When the fluorescent ceramic is irradiated by laser light (for example, blue laser light), the incident laser light may scatter through the air holes at the interior of the crystal grains of the ceramic matrix, and the scattered laser light can then excite more fluorescent powder bodies in the vicinity to emit light, thereby improving the luminous efficiency of the fluorescent ceramic.

### BRIEF DESCRIPTION OF DRAWINGS

In order to more clearly illustrate technical solutions of embodiments of the present disclosure, the drawings to be used in the embodiments will be briefly described below. Obviously, the drawings in the following description are some embodiments of the present disclosure. For those skilled in the art, other drawings may also be obtained based on these drawings without paying any creative labor.
FIG. 1 is a structural schematic diagram showing a fluorescent ceramic according to an embodiment of the present disclosure;
FIG. 2 is a schematic diagram showing a microstructure of a fluorescent ceramic according to an embodiment of the present disclosure;
FIG. 3 is a flow chart of a method for manufacturing a fluorescent ceramic according to an embodiment of the present disclosure;
FIG. 4 is a flow chart of a method for manufacturing a fluorescent ceramic according to another embodiment of the present disclosure;
FIG. 5 is a schematic diagram showing a process for sintering a fluorescent ceramic according to an embodiment of the present disclosure; and
FIG. 6 is a structural schematic diagram of a light source device according to an embodiment of the present disclosure.

### DESCRIPTION OF EMBODIMENTS

In order to more clearly illustrate objectives, technical solutions, and advantages of the present disclosure, the embodiments of the present disclosure are clearly and completely described in details with reference to the accompanying drawings. It can be understood that the described specific embodiments are only used to explain the present disclosure, but not to limit the present disclosure. In addition, it should be noted that, for ease of description, the drawings only show a part but not all of the structure related to the present disclosure. All other embodiments obtained by those skilled in the art based on the embodiments of the present disclosure without paying creative labor shall fall into the protection scope of the present disclosure.

The terms "first", "second", and the like in the present disclosure are used to distinguish different objects, rather than to describe a specific sequence. In addition, the terms "include" and "have" and any variations thereof are intended to cover non-exclusive inclusions. For example, processes, methods, systems, products, or devices that include a series of steps or elements are not limited to the listed steps or elements, but optionally includes unlisted steps or elements, or optionally includes other steps or elements inherent in these processes, methods, products or devices.

The "embodiment" mentioned herein means that specific features, structures, or performances described in combination with the embodiments may be included in at least one embodiment of the present disclosure. The appearance of the phrase in various places in the specification does not necessarily refer to the same embodiment, nor is it an independent or alternative embodiment mutually exclusive with other embodiments. Those skilled in the art clearly and implicitly understand that the embodiments described herein can be combined with other embodiments.

Fluorescent materials used in laser light illumination and display technologies can be roughly divided into three categories. I. The fluorescent powder bodies are encapsulated by organic polymers such as organic silica gel/organic resin. As the power of the blue laser light increases, the heat generated is also increased sharply when the fluorescent powder body encapsulated by the organic matrix performs light conversion, causing its own temperature to rise significantly. Therefore, it in turn causes the encapsulated silica gel/organic resin and other organic matrices to age and yellow, so that problems such as loss of light efficiency and reduced lifespan occur. II. Fluorescent glass material. The fluorescent glass material is formed mainly by encapsulating fluorescent powder bodies in SiO₂-based/borosilicate-based glass. Compared with organic resins, fluorescent glass has great improvements in heat resistance, high thermal stability, low color shift, and the like, but its thermal conductivity is not significantly improved compared with organic resins. III, Fluorescent Ceramic. Compared with fluorescent materials encapsulated by organic matrix and inorganic glass matrix, fluorescent ceramic has significant advantages in terms of heat resistance and thermal conductivity. Fluorescent ceramic has become an important development direction of laser light illumination and display technologies due to excellent performances of the fluorescent ceramic.

There are two types of fluorescent ceramic. One type of fluorescent ceramic is manufactured by doping rare earth elements in transparent ceramic such as YAG (Y₃Al₅O₁₂, yttrium aluminum garnet), which is a pure phase ceramic. The other type of fluorescent ceramic is a multi-phase PIA ceramic formed by encapsulating the fluorescent powder body in a transparent ceramic with high thermal conductivity.

For the fluorescent ceramic, it is of vital importance to improve its luminous efficiency. Pure phase ceramic in the fluorescent ceramic (such as the first fluorescent ceramic mentioned above) is difficult to have a high utilization rate of excitation light due to their own structure. When it is excited, its luminous centers are relatively small, resulting in poor luminous efficiency. In contrast, fluorescent ceramic formed by encapsulating fluorescent powder in transparent ceramic can have a good utilization rate of excitation light. Therefore, the fluorescent ceramic with a multi-phase structure has more advantages.

In view of this, the present disclosure provides a fluorescent ceramic, which can improve the luminous efficiency of the fluorescent ceramic. The fluorescent ceramic includes a ceramic matrix and a fluorescent powder body dispersed within the ceramic matrix. Air holes are formed at the interior of the crystal grains of the ceramic matrix. This will be explained in detail below.

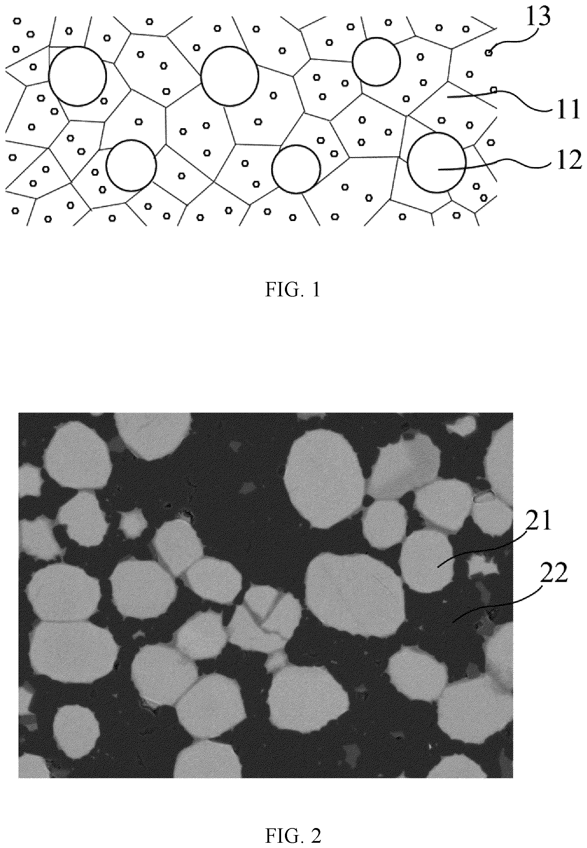

Referring to FIG. 1, FIG. 1 is a structural schematic diagram showing a fluorescent ceramic according to an embodiment of the present disclosure.

In an embodiment, the fluorescent ceramic includes a ceramic matrix 11 and fluorescent powder body 12 dispersed within the ceramic matrix 11. It can be seen that the fluorescent powder body 12 is encapsulated in the ceramic matrix 11. The fluorescent ceramic has a multi-phase structure having a high utilization rate of excitation light, which is beneficial to improving the luminous efficiency of the fluorescent ceramic.

For example, the ceramic matrix 11 can be made of alumina or the like. The fluorescent powder body 12 is encapsulated in the ceramic matrix 11. Since the ceramic matrix 11 is transparent, it does not hinder the fluorescent powder body 12 from emitting light. The microstructure of the fluorescent ceramic based on alumina ceramic is shown in FIG. 2, in which the fluorescent powder body 21 is uniformly distributed in a continuous medium alumina phase 22 (i.e., the ceramic matrix). Since alumina belongs to a trigonal crystal system, it has birefringence. Laser light is scattered in the fluorescent ceramic due to birefringence. The scattered laser light in the fluorescent ceramic can then excite more fluorescent powder body in its vicinity, thereby achieving higher luminous efficiency. Based on this, the luminous efficiency of multi-phase ceramic (such as PIA ceramic) is better than the luminous efficiency of pure phase ceramic (such as YAG ceramic), which is particularly significant when the fluorescent ceramic is thin.

In an embodiment, on this basis, air holes 13 are formed at the interior of the crystal grains of the ceramic matrix 11. When the laser light reaches the air holes 13, the laser light is further scattered, thereby further increasing the scattering of the incident laser light. The scattered laser light can further excite more fluorescence powder body 12 in its vicinity to emit light, thereby improving the luminous efficiency of the fluorescent ceramic.

It should be noted that the air holes 13 at the interior of the crystal grains of the fluorescent ceramic described in an embodiment are not located at a border of the crystal grain, but are located in a region near the middle of the crystal grain. If the air hole 13 is located at the border of the crystal grain, intergranular fracture may occur in the fluorescent ceramic, thereby greatly reducing the strength of the fluorescent ceramic. In an embodiment, the air holes 13 are located near the middle of the crystal grain, so that the ceramic strength can be effectively prevented from being reduced.

Optionally, the grain size of the ceramic matrix 11 is preferably 5 µm to 20 µm, e.g., 10 µm. The inventors found through a number of experiments that the ceramic matrix 11 with a grain size of 5 µm to 20 µm is beneficial to form a continuous phase, ensuring that the fluorescent ceramic has good thermal conductivity, while ensuring the structural strength of the fluorescent ceramic.

Furthermore, a plurality of air holes 13 evenly distributed is formed at the interior of the crystal grains of the ceramic matrix 11. The air holes 13 at the interior of the crystal grains of the ceramic matrix 11 are uniformly distributed, so that the incident laser light can reach the air holes 13 and be scattered, thereby further increasing the scattering of the incident laser light, and further improving the luminous efficiency of the fluorescent ceramic.

Optionally, a diameter of the air hole 13 is preferably 0.1 µm to 2 µm, e.g., 1 µm. The inventor found through a number of experiments that the air hole 13 with a diameter of 0.1 µm to 2 µm can maximize the scattering of incident laser light, while ensuring various performances of the fluorescent ceramic.

Further, the fluorescent powder body 12 may be Ce:YAG yellow fluorescent powder body or Ce:LuAG green fluorescent powder body and the like, and its particle size is preferably 5 µm to 30 µm, e.g., 15 µm. The inventor found through a large number of experiments that the fluorescent powder body 12 with a particle size of 5 µm to 30 µm, which is excited by laser light to emit light, can make the fluorescent ceramic have a good luminous effect.

It can be seen from the above that the fluorescent powder body in the fluorescent ceramic provided by the present disclosure is excited by laser light (e.g., blue laser light) to emit light. In addition, air holes are formed at the interior of the crystal grains of the ceramic matrix. When the fluorescent ceramic is irradiated by laser light, the incident laser light may scatter through the air holes at the interior of the crystal grains of the ceramic matrix, and the scattered laser light can then excite more fluorescent powder bodies in the vicinity to emit light, thereby improving the luminous efficiency of the fluorescent ceramic.

The method for manufacturing the fluorescent ceramic described in the above embodiments will be described below.

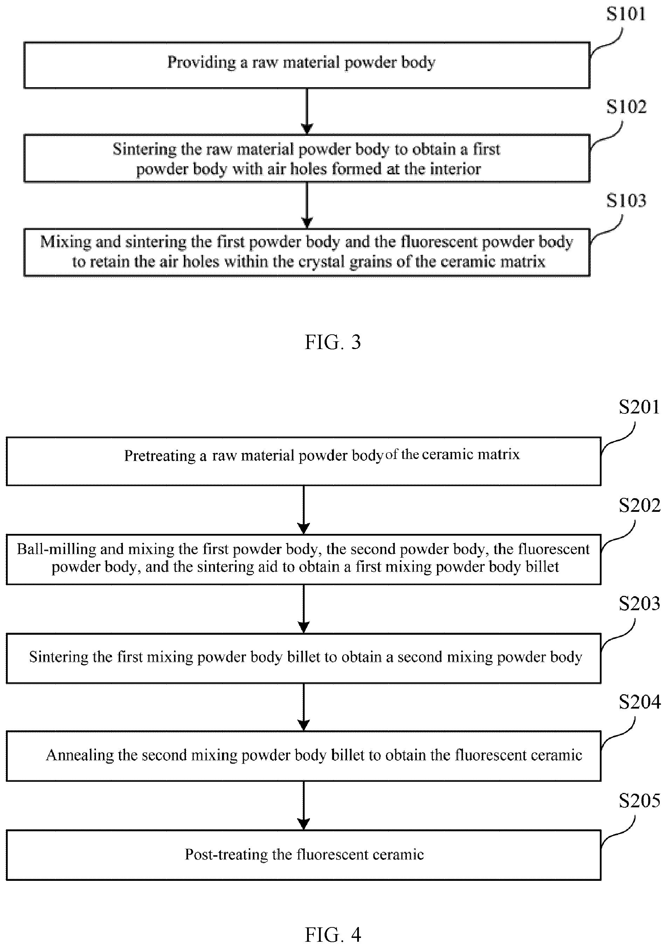

Referring to FIG. 3, FIG. 3 is a flow chart of a method for manufacturing a fluorescent ceramic according to an embodiment of the present disclosure. It should be noted that the method for manufacturing the fluorescent ceramic described in an embodiment is not limited to following steps.

In S101, raw material powder body of the ceramic matrix is provided.

In an embodiment, the raw material powder body of the ceramic matrix is provided for manufacturing a fluorescent ceramic. The raw material powder body of the ceramic matrix is configured to form a ceramic matrix of the fluorescent ceramic.

In S102, the raw material powder body of the ceramic matrix is sintered to obtain a first powder body with air holes formed therein;

In an embodiment, the raw material powder body of the ceramic matrix is sintered to obtain the first powder body. The first powder body is used in the subsequent process of manufacturing the fluorescent ceramic to form the ceramic matrix of the fluorescent ceramic. Air holes are formed at the interior of the crystal grains of the first powder body, which are used to increase the scattering of incident laser light, improving the luminous efficiency of the fluorescent ceramic.

In S103, the first powder body and fluorescent powder body are mixed and sintered to retain the air holes at the interior of the crystal grains of the ceramic matrix.

In an embodiment, the first powder body obtained in the above steps and fluorescent powder body are mixed and sintered, that is, secondary sintering is performed to obtain a ceramic matrix and a fluorescent powder body dispersed within the ceramic matrix. The fluorescent powder body is excited by the laser light to emit light, which realizes the luminous function of the fluorescent ceramic. Meanwhile, after the secondary sintering, the air holes obtained by the primary sintering may remain at the interior of the crystal grains of the ceramic matrix, and then the fluorescent ceramic with the air holes at the interior of the crystal grains can be obtained.

Referring to FIG. 4, FIG. 4 is a flow chart of a method for manufacturing a fluorescent ceramic according to another embodiment of the present disclosure. It should be noted that the method for manufacturing the fluorescent ceramic described in this embodiment is not limited to the following steps.

In S201, a raw material powder body of the ceramic matrix is pretreated.

In an embodiment, a raw material powder body of the ceramic matrix having a second particle size is provided. The raw material powder body of the ceramic matrix is pretreated to obtain a first powder body having a first particle size. In an embodiment, a part of the raw material powder body of the ceramic matrix is sintered to obtain a first powder body billet, and the remaining part of raw material powder body of the ceramic matrix is a second powder body. The first powder body billet is crushed and grounded to obtain the first powder body with air holes formed at the interior of the crystal grains. The raw material powder body of the ceramic matrix, the first powder body and the second powder body are of the same material.

In an embodiment, the part of the raw material powder body of the ceramic matrix is placed in the crucible (the material of the crucible is the same as the materials of the raw material powder body of the ceramic matrix and the first powder body, such that chemical reaction can be avoided among the raw material powder body of the ceramic matrix, the first powder body and the crucible, which is beneficial to maintain the stable composition of the raw material powder body of the ceramic matrix and the first powder body), vibrated and compacted, and then sintered in a muffle furnace at a temperature of 1600°C to 1800°C for 2h to 4h. After sintering is completed to cool, a sintered block in the first powder body billet is crushed and ball-milled to a first powder body with a first particle size, and bottled for use, so that the pretreatment of the raw material powder body of the ceramic matrix is completed.

In S202, the first powder body, the second powder body, the fluorescent powder body, and the sintering aid are ball-milled and mixed to obtain a first mixing powder body billet.

In an embodiment, the first powder body obtained by the pretreatment, the second powder body, the fluorescent powder body and the sintering aid are ball-milled and mixed (ball-milling can be understood by those skilled in the art, which will not be elaborated here) to obtain the first mixing powder body billet for subsequent sintering process. A mass ratio of the first powder body to the second powder body is 4:6 to 7:3. The fluorescent powder body accounts for 30% to 70% of the total mass of the first mixing powder body billet. The sintering aid accounts for 0.1% to 1% of the total mass of the first mixing powder body billet. The inventor has concluded through a large amount of experimental data that when the first powder body, the second powder body, the fluorescent powder body and the sintering aid are added with the above amounts, the manufactured fluorescent ceramic can have good performance in various aspects.

It should be noted that the particle size of the first powder body is greater than the particle size of the second powder body, that is, the first particle size is greater than the second particle size. The second powder body with a smaller grain size is mixed and sintered with the first powder body with a larger grain size. The second powder body can better fuse with the first powder body during the secondary sintering process, such that the various crystal grains of the first powder body are connected into a continuous phase to cause the ceramic matrix of the finally manufactured fluorescent ceramic to be a continuous phase, so that the fluorescent ceramic has good thermal conductivity which is beneficial to heat dissipation, and has good structural strength.

In an embodiment, the first particle size may be 5 µm to 10 µm, and the second particle size may be 0.05 µm to 0.5 µm. The inventor summarized the above optimal particle size ranges of the first powder body and the second powder body through a large amount of experimental data, which can maximize the formation of air holes in the fluorescent ceramic and enable the ceramic matrix to form a continuous phase.

In an embodiment, the sintering aid may be at least one of magnesium oxide, yttrium oxide, lanthanum oxide, and titanium oxide. In addition, the sintering aid is preferably titanium oxide. The addition of titanium oxide as the sintering aid may facilitate the formation of intracrystalline holes in the ceramic matrix. The formation of intracrystalline holes is mainly due to the fact that variable titanium ions cause a large number of lattice defects in the ceramic matrix (e.g., the alumina-based ceramic matrix), and also form a solid solution with the ceramic matrix to promote the migration of grain boundaries to form intracrystalline holes. The air holes change from interface diffusion to bulk diffusion which requires higher energy and is difficult to eliminate, so that it is easier to form intracrystalline holes.

In S203, the first mixing powder body billet is sintered to obtain a second mixing powder body.

In an embodiment, the first mixing powder body billet obtained by mixing is filled into a graphite mold, and is pre-compressed under a relatively small pressure. Subsequently, the graphite mold filled with the first mixing powder body billet is placed in an SPS hot-pressing furnace. The first mixing powder body billet is sintered in a vacuum or protective gas atmosphere for heat preservation and sintering to obtain a second mixing powder body billet.

The inventors concluded through a large amount of experimental data that when the sintering is performed at a temperature of 1300°C to 1600°C, a pressure of 20 MPa to 180MPa for a time period of 0.5 hour to 4 hours, the sintering bond of various powder bodies in the first mixing powder body billet can be maximized to manufacture the desirable fluorescent ceramic.

In an embodiment, the protective gas may be inert gases such as helium, neon, argon, or other chemically inactive gases, which are not limited thereto.

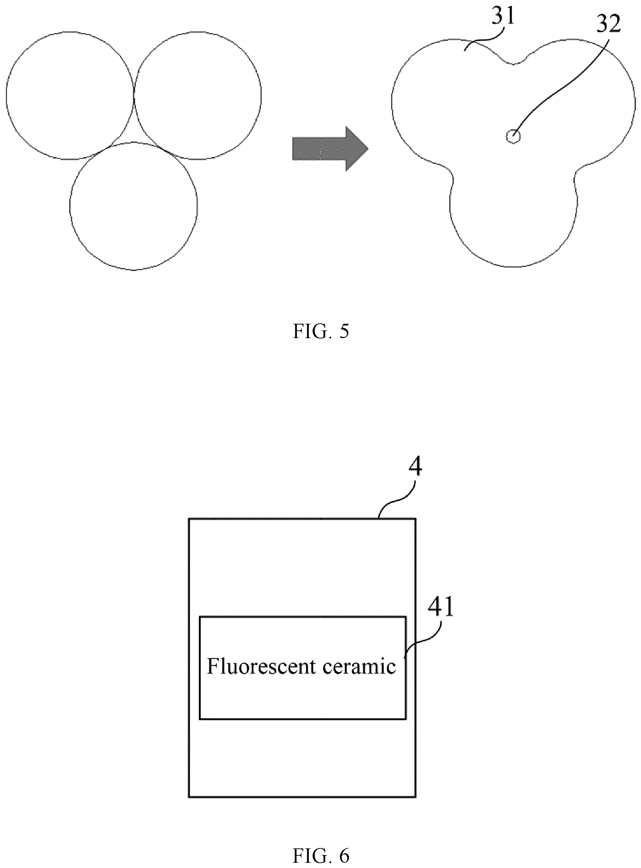

It should be noted that by pre-sintering the raw material powder body of the ceramic matrix, particles of the raw material powder body of the ceramic matrix that are in contact with each other gradually change from point contact to surface contact during the sintering process, forming a sintering neck. Subsequently, agglomerates of the first powder body billet are crushed, and then sintered together with the untreated second powder body, the fluorescent powder body and a small amount of sintering aid. The sintering aid is located on the surfaces of the large-particle first powder body formed by the pretreatment, the untreated second powder body and the fluorescent powder body. During the sintering process, the sintering aid may accelerate the sintering between the first powder body and the second powder body, and the pretreated large-particle first powder body 31 is likely to form air holes 32. The air holes 32 may remain at the interior of the crystal grains because it is difficult to eliminate, so that the fluorescent ceramic with air holes at the interior of the crystal grains is obtained, as shown in FIG. 5. The small-particle second powder body can be filled between the crystal grains of the first powder body, so that the ceramic matrix formed by the first powder body and the second powder body is a continuous phase, ensuring the good thermal conductivity of the ceramic matrix.

In S204, the second mixing powder body billet is annealed to obtain the fluorescent ceramic.

In an embodiment, after the first mixing powder body billet is sintered to obtain the second mixing powder body billet, the second mixing powder body billet needs to be annealed to obtain the fluorescent ceramic. In an embodiment, the second mixing powder body billet is annealed in an air atmosphere at a temperature of 1200°C to 1400°C for a time period of 5 hours to 20 hours.

In S205, the fluorescent ceramic is post-treated.

In an embodiment, after the annealing process is performed to obtain a rough billet of the fluorescent ceramic, the fluorescent ceramic needs to be post-treated, so that the fluorescent ceramic meets the requirements of product size specifications and surface properties. In an embodiment, the post-treatment performed on the fluorescent ceramic includes at least one of cutting treatment, grinding treatment, polishing treatment, and the like. The cutting treatment is intended to cut the rough billet of the fluorescent ceramic into a fluorescent ceramic with the size and shape required by the product. The grinding treatment and polishing treatment are intended to cause the surface flatness, smoothness and other surface properties of the fluorescent ceramic to meet product requirements.

In combination with the above methods for manufacturing the fluorescent ceramic, several specific processes for manufacturing the fluorescent ceramic will be illustrated in following examples.

### Example 1

Alumina nano-powder with a particle size of 0.1 µm was placed in an alumina crucible in which the purity of the alumina used is above 99%, the alumina nano-powder was vibrated and compacted, and then pre-sintered in a muffle furnace at a temperature of 1700°C for 4 hours. After sintering was completed to obtain a sintered alumina block to be cooled, the sintered alumina block was crushed and ball-milled to a first powder body with a particle size of 5 to 10 µm, and bottled for subsequent use.

The pretreated alumina powder (i.e., the first powder body) and the untreated alumina powder (i.e., the second powder body) were ball-milled in a mass ratio of 6:4 together with a small amount of absolute ethanol. Alumina balls were selected (with the similar principle to the choice of alumina crucible) for ball-milling and mixing, in which ball-milling time was 24 hours. At the same time, magnesium oxide was added as a sintering aid, which accounts for 0.5% of the total mass of the powder body. A certain amount of YAG:Ce fluorescent powder body was weighed, which accounts for 50% of the total powder body. After ball-milling and mixing for 1 hour, a slurry was dried at 70°C, followed by grinding and sieving.

The mixed fluorescent ceramic powder body was filled into a graphite mold, pre-pressed under low pressure. Subsequently, the graphite mold was placed in an SPS hot-pressing furnace at a vacuum atmosphere. Sintering was performed with heat preservation at a temperature of 1500°C and a pressure of 50 MPa for 1h. After the sintering was completed, the fluorescent ceramic was annealed in an air atmosphere at a temperature of 1200°C for 15h. Finally, the fluorescent ceramic was cut, ground and polished to obtain intracrystalline porous fluorescent ceramic.

### Example 2

Alumina nano-powder with a particle size of 0.05µm was placed in an alumina crucible in which the purity of the alumina used is above 99%. The Alumina nano-powder was vibrated and compacted, and then pre-sintered in a muffle furnace at a temperature of 1650°C for 5h. After sintering was completed to obtain a sintered alumina block to be cooled, the sintered alumina block was crushed and ball-milled to a first powder body with a particle size of 5 to 10 µm, and bottled for subsequent use.

The pretreated alumina powder (i.e., the first powder body) and the untreated alumina powder (i.e., the second powder body) were ball-milled and mixed in a mass ratio of 1:1 together with a small amount of absolute ethanol. Alumina balls were selected for ball-milling and mixing, in which ball-milling time was 16 hours. In addition, magnesium oxide and yttrium oxide were added as a sintering aid, which accounts for 0.4% and 0.5% of the total mass of the powder body, respectively. A certain amount of YAG:Ce fluorescent powder body was weighed, which accounts for 40% of the total powder body. After ball-milling and mixing for 1h, a slurry was dried at 70°C, followed by grinding and sieving.

The mixed fluorescent ceramic powder body was filled into a graphite mold, pre-pressed under low pressure. Subsequently, the graphite mold was placed in an SPS hot-pressing furnace at a vacuum atmosphere. Sintering was performed with heat preservation at a temperature of 1550°C and a pressure of 60 MPa for 0.5h. After the sintering was completed, the fluorescent ceramic was annealed in an air atmosphere at a temperature of 1300°C for 8h. Finally, the fluorescent ceramic was cut, ground and polished to obtain intracrystalline porous fluorescent ceramic.

### Example 3 (omitting the pretreatment step)

Nano-grade aluminum oxide powder with high-purity and titanium oxide powder high-purity (as sintering aid) were selected, both of which have a purity of more than 99%. These aluminum oxide powder and titanium oxide powder were poured into a ball-milling tank together with a small amount of absolute ethanol. Titanium oxide accounts for 1% of the total mass of the powder body. High-purity alumina balls were selected for ball-milling. The milling time was 20 hours.

A certain amount of YAG:Ce fluorescent powder body that accounts for 60% of the mass of the total powder body was weighed, was ball-milled for 1h, dried in vacuum at a temperature of 60°C, and then ground and sieved for use.

The ceramic green body was placed in a hot-pressing sintering furnace and sintered under an argon atmosphere at a temperature of 1550°C and a pressure of 40 MPa for 1 hour. After being hot pressed and sintered, the fluorescent ceramic was annealed at 1350°C for 10h in an air atmosphere. Finally, the ceramic was subjected to rough grinding, fine grinding and polishing to obtain intracrystalline porous fluorescent ceramic.

To sum up, the method for manufacturing the fluorescent ceramic provided by the present disclosure provides the first powder body and the second powder body that have different particle sizes but are made of the same material. The first powder body, the second powder body and the fluorescent powder body are mixed and sintered, so that the fluorescent powder body is dispersed within the ceramic matrix formed by the first powder body and the second powder body, and air holes are formed at the interior of the crystal grains of the ceramic matrix. When the fluorescent ceramic is irradiated by the blue laser light, the incident blue laser light may be scattered through the air holes at the interior of the crystal grains of the ceramic matrix. The scattered blue laser light can then excite more fluorescent powder bodies in the vicinity to emit light, thereby improving the luminous efficiency of the fluorescent ceramic.

Referring to FIG. 6, FIG. 6 shows a structural schematic diagram of a light source device according to an embodiment of the present disclosure.

In an embodiment, a light source device 4 includes a fluorescent ceramic 41. The fluorescent ceramic 41 may be the fluorescent ceramic described in the above embodiments, which will not be elaborated here. The specific application forms of the light source device 4 may be a fixed light source, a micro-projection light source, a television, and other projection devices, etc., which are not limited thereto.

The above are merely some embodiments of the present disclosure, which, as mentioned above, are not intended to limit the present disclosure. Any equivalent structure or equivalent process transformation made by using the content of the description and drawings of the present disclosure which are directly or indirectly applied to other related art shall fall into the protection scope of the present disclosure.

## Claims

1. A fluorescent ceramic, comprising: a ceramic matrix and a fluorescent powder body dispersed within the ceramic matrix, wherein at least one air hole is formed at an interior of a crystal grain of the ceramic matrix.

2. The fluorescent ceramic according to claim 1, wherein the at least one air hole comprises a plurality of air holes uniformly distributed at an interior of the crystal grain of the ceramic matrix.

3. The fluorescent ceramic according to claim 2, wherein one of the plurality of air holes has a diameter ranging from 0.1 µm to 2 µm.

4. The fluorescent ceramic according to claim 1, wherein the fluorescent powder body has a particle size ranging from 5 µm to 30 µm.

5. The fluorescent ceramic according to claim 1, wherein the ceramic matrix has a crystal grain size ranging from 5 µm to 20 µm.

6. A method for preparing a fluorescent ceramic, wherein the method comprises:
providing a raw material powder body of a ceramic matrix;
sintering the raw material powder body of the ceramic matrix to obtain a first powder body with an air hole formed at an interior of a crystal grain; and
mixing and sintering the first powder body and the fluorescent powder body to retain the air hole at the interior of the crystal grain of the ceramic matrix.

7. The method according to claim 6, wherein
said sintering the raw material powder body of the ceramic matrix to obtain a first powder body with an air hole formed at the interior of a crystal grain comprises:
sintering part of the raw material powder body of the ceramic matrix to obtain a first powder body billet; wherein a remaining part of the raw material powder body of the ceramic matrix is used as a second powder body; and
crushing and grinding the first powder body to obtain the first powder body with the air hole formed at the interior of the crystal grain.

8. The method according to claim 7, wherein said sintering part of the raw material powder body of the ceramic matrix to obtain a first powder body billet comprises:
sintering part of the raw material powder body of the ceramic matrix in an atmosphere with a temperature of 1600°C to 1800°C for 2 hours to 6 hours to obtain the first powder body billet.

9. The method according to claim 7, wherein the first powder body has a particle size greater than the second powder body.

10. The method according to claim 7, wherein said mixing and sintering the first powder body and the fluorescent powder body comprises:
mixing and sintering the first powder body, the second powder body, the fluorescent powder body and a sintering aid, wherein
the sintering aid is selected from at least one of magnesium oxide, yttrium oxide, lanthanum oxide, or titanium oxide.

11. The method according to claim 10, wherein the sintering aid at least comprises titanium oxide.

12. The method according to claim 10, wherein said mixing and sintering the first powder body, the second powder body, the fluorescent powder body and a sintering aid comprises:
mixing the first powder body, the second powder body, the fluorescent powder body, and the sintering aid through ball-milling, to obtain a first mixing powder body billet;
placing the first mixing powder body billet in a vacuum atmosphere or a protective gas atmosphere for heat preservation and sintering under a sintering temperature ranging from 1300°C to 1600°C, and a pressure ranging from 20 MPa to 180 MPa, for a time period ranging from 0.5 hours to 4 hours, to obtain a second mixing powder body billet; and
annealing the second mixing powder body billet in an air atmosphere under a temperature ranging from 1200°C to 1400°C, for a time period ranging from 5 hours to 20 hours, to obtain the fluorescent ceramic.

13. The method according to claim 12, wherein
the fluorescent powder body accounts for 30% to 70% of a total mass of the first mixing powder body billet, the sintering aid accounts for 0.1% to 1% of the total mass of the first mixing powder body billet, and a mass ratio of the first powder body to the second powder body ranges from 4:6 to 7:3.

14. A light source device, comprising the fluorescent ceramic according to any one of claims 1 to 5.
